# EUROPEAN PATENT APPLICATION

(11) **EP 4 852 206 A1**
(43) Date of publication of application: **09.12.2026**
(21) Application number: 25748358.6
(22) Date of filing: 17.01.2025
(51) Int. Cl.: H01M 50/548, H01M 50/103, H01M 50/15, H01M 50/176, H01M 50/531, H01M 50/534, H01M 50/536, H01M 50/562

(54) **BATTERY CELL**

(30) Priority: 30.01.2024 JP 2024012110
(71) Applicant: AESC Japan Ltd., Yokohama-shi, Kanagawa 220-0012 (JP)
(72) Inventor: NAKAI, Masayuki, Yokohama-shi, Kanagawa 220-0012 (JP)
(74) Representative: Becker, Eberhard
(86) International application number: PCT/JP2025/001297
(87) International publication number: WO 2025/164362

(57) **Abstract**

A battery cell (100) comprises: a battery element (110); a lid material (120) that at least partially covers the battery element (110); a conductor (130) electrically connected to the battery element (110); and an exterior film (140) wound around the battery element (110) and the lid material (120). The conductor (130) has: a barrier layer (132) located at least partially between the lid material (120) and the battery cell (100); an external terminal (134) at least partially drawn out from the lid material (120); and an internal terminal (136) located at least partially between the barrier layer (132) and the battery cell (100).

## Description

### Technical Field

The present invention relates to a battery cell.

### Background Art

Various battery cells have been developed in recent years. A battery cell may include a battery element, a lid at least partially covering the battery element, and an exterior film wound around the battery element and the lid.

Patent Document 1 describes a secondary battery. The secondary battery includes a negative electrode connection terminal and an intermediate member welded and joined to the negative electrode connection terminal.

### Related Art Document

### Patent Document

Patent Document 1: International Publication No. 2012/169055

### SUMMARY OF THE INVENTION

### Problem to be Solved by the Invention

A conductor such as a terminal may be electrically connected to the battery element. In the case where the battery element and the conductor are electrically connected to each other, there may be a demand for an improvement in the function of the conductor.

An example of an object of the present invention is to enhance the function of the conductor electrically connected to the battery element. Other objects of the present invention will become apparent from the description in the present specification.

### Means for Solving the Problem

One aspect of the present invention is as follows.
1. A battery cell, including:
   a battery element;
   a lid at least partially covering the battery element;
   a conductor electrically connected to the battery element; and
   an exterior film wound around the battery element and the lid, wherein
   the conductor includes a first portion at least partially positioned between the lid and the battery element, a second portion at least partially extended from the lid, and a third portion at least partially positioned between the first portion and the battery element.
2. The battery cell according to 1., wherein the first portion and the second portion are at least partially joined to each other, and
   the first portion and the third portion are at least partially joined to each other.
3. The battery cell according to 1. or 2., wherein the second portion and the third portion contain materials different from each other.

### Effects of the Invention

According to the above aspect of the present invention, it is possible to enhance the function of the conductor electrically connected to the battery element.

### BRIEF DESCRIPTION OF THE DRAWINGS

[FIG. 1] is a perspective view of a battery cell according to an embodiment.
[FIG. 2] is a schematic cross-sectional view of a first virtual plane α shown in FIG. 1.
[FIG. 3] is a schematic cross-sectional view of a second virtual plane β shown in FIG. 1.
[FIG. 4] is a front view of a first lid and a first conductor according to the first example of the embodiment.
[FIG. 5] is a front view of a first lid and a first conductor according to the second example of the embodiment.
[FIG. 6] is a schematic cross-sectional view of a part of a first lid according to the third example of the embodiment.
[FIG. 7] is a schematic cross-sectional view of a part of a first lid according to the fourth example of the embodiment.

### DESCRIPTION OF THE EMBODIMENTS

Hereinafter, embodiments of the present invention will be described with reference to the drawings. In all the drawings, similar components are denoted by similar reference numerals, and descriptions thereof are omitted as appropriate.

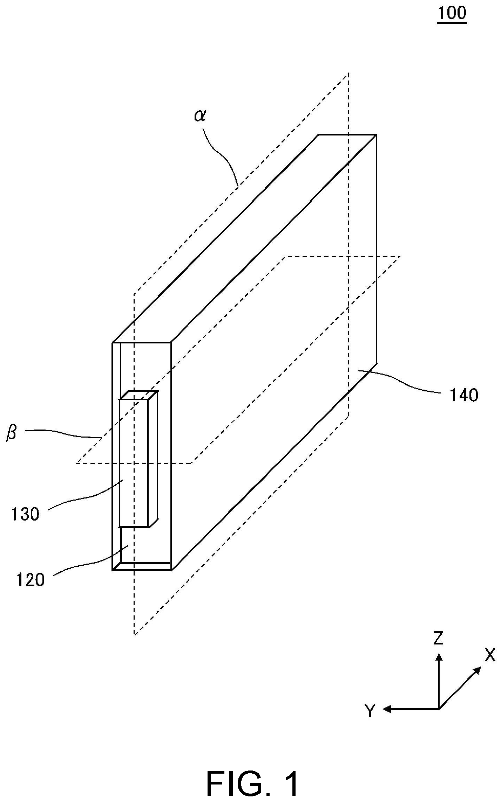

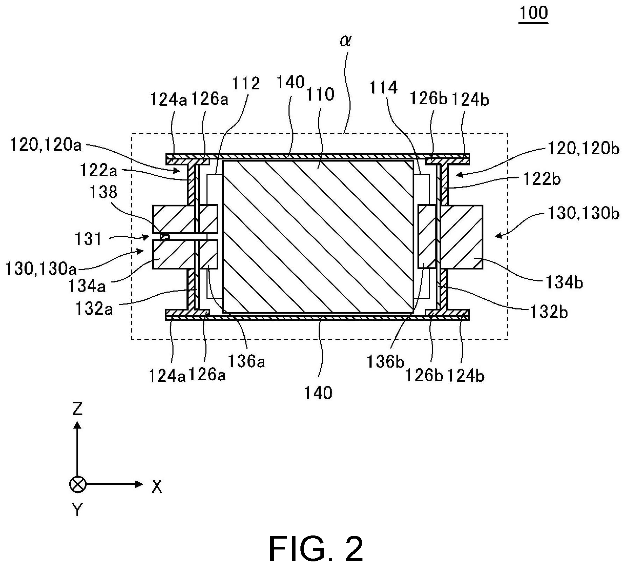

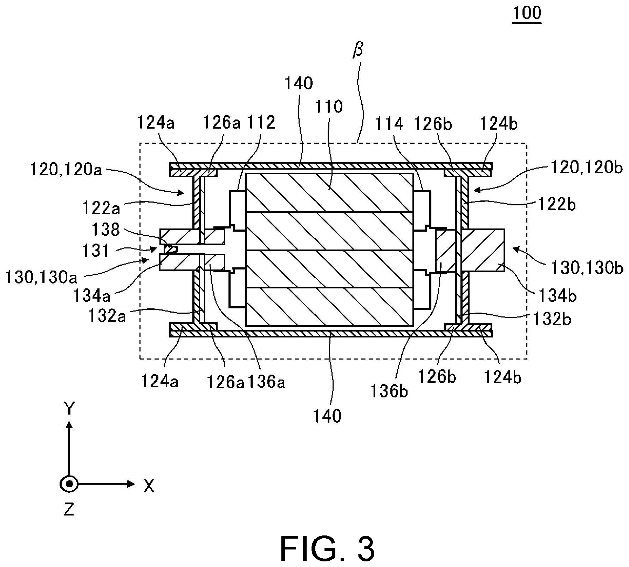

FIG. 1 is a perspective view of a battery cell 100 according to an embodiment. FIG. 2 is a schematic cross-sectional view of a first virtual plane α shown in FIG. 1. FIG. 3 is a schematic cross-sectional view of a second virtual plane β shown in FIG. 1.

In each drawing, an X direction, a Y direction, and a Z direction are shown for descriptive purposes. The X direction indicates a front-rear direction of the battery cell 100. The Y direction is a direction perpendicular to the X direction. The Y direction indicates a left-right direction of the battery cell 100. The Z direction is a direction perpendicular to both the X direction and the Y direction. The Z direction indicates an up-down direction of the battery cell 100. An arrow indicating the X direction, indicating the Y direction, and an arrow indicating the Z direction indicate a rearward direction, a rightward direction, and an upward direction of the battery cell 100, respectively. In FIG. 2, an open circle with an X indicating the Y direction shows that the arrow indicating the Y direction extends from the front toward the back of the page. In FIG. 3, an open circle with a dot indicating the Z direction shows that the arrow indicating the Z direction extends from the back toward the front of the page. The relationship between the X direction, the Y direction, and the Z direction and the front-rear direction, the left-right direction, and the up-down direction of the battery cell 100 is not limited to the examples described in the embodiments.

Hereinafter, as needed, a side indicated by the arrow indicating the X direction is referred to as the +X side, and a side opposite to the side indicated by the arrow indicating the X direction is referred to as the -X side. Hereinafter, as needed, a side indicated by the arrow indicating the Y direction is referred to as the +Y side, and a side opposite to the side indicated by the arrow indicating the Y direction is referred to as the -Y side. Hereinafter, as needed, a side indicated by the arrow indicating the Z direction is referred to as the +Z side, and a side opposite to the side indicated by the arrow indicating the Z direction is referred to as the -Z side.

The first virtual plane α shown in FIG. 1 and FIG. 2 is a plane perpendicular to the Y direction at a substantially central portion of the battery cell 100 according to the embodiment in the Y direction. The second virtual plane β shown in FIG. 1 and FIG. 3 is a plane perpendicular to the Z direction at the substantially central portion of the battery cell 100 according to the embodiment in the Z direction.

As shown in FIG. 1 to FIG. 3, the battery cell 100 according to the embodiment includes a plurality of battery elements 110, a pair of lids 120, a pair of conductors 130, and an exterior film 140.

As shown in FIG. 3, the plurality of battery elements 110 overlap each other in the Y direction. Each battery element 110 has a positive electrode, a negative electrode, and a separator, which are not shown. As shown in FIG. 1 to FIG. 3, each battery element 110 has a substantially rectangular parallelepiped shape with a length in the X direction, a width in the Z direction, and a height in the Y direction. As viewed from the X direction, each battery element 110 has a substantially rectangular shape with a pair of short sides extending in the Y direction and a pair of long sides extending in the Z direction. As shown in FIG. 2 and FIG. 3, a plurality of positive electrode current collectors 112 are extended from the plurality of battery elements 110 toward the -X side. The positive electrodes of the battery elements 110 and the positive electrode current collectors 112 are electrically connected to each other. As shown in FIG. 2 and FIG. 3, a plurality of negative electrode current collectors 114 are extended from the plurality of battery elements 110 toward the +X side. The negative electrodes of the battery elements 110 and the negative electrode current collectors 114 are electrically connected to each other.

Hereinafter, the battery cell 100 is described as having a plurality of battery elements 110. However, the number of battery elements 110 included in the battery cell 100 and the shape of each battery element 110 are not limited to the example shown in FIG. 1 to FIG. 3. The number of battery elements 110 included in the battery cell 100 may be one, two, three, or five or more.

As shown in FIG. 2 and FIG. 3, the pair of lids 120 are positioned on both sides of the plurality of battery elements 110 in the X direction. Each lid 120 at least partially covers the plurality of battery elements 110. Each lid 120 is, for example, an insulator such as a resin. Hereinafter, unless otherwise specified, a first lid 120a and a second lid 120b refer to the lid 120 on the -X side and the lid 120 on the +X side, respectively. The first lid 120a has a first lid base material 122a, a first external protrusion 124a, and a first internal protrusion 126a. The second lid 120b has a second lid base material 122b, a second external protrusion 124b, and a second internal protrusion 126b. The second lid base material 122b, the second external protrusion 124b, and the second internal protrusion 126b correspond to the first lid base material 122a, the first external protrusion 124a, and the first internal protrusion 126a, respectively.

The first lid 120a is described with reference to FIG. 2 and FIG. 3.

The first lid base material 122a has a substantially plate shape perpendicular to the X direction. The first lid base material 122a covers the end surfaces of the plurality of battery elements 110 on the -X side. As viewed from the X direction, the first lid base material 122a has a substantially rectangular shape with a pair of short sides extending in the Y direction and a pair of long sides extending in the Z direction.

The first external protrusion 124a is positioned on the opposite side from the side where the plurality of battery elements 110 are positioned with respect to the first lid base material 122a. The first external protrusion 124a protrudes toward the -X side from the entire periphery around the X direction of the surface of the first lid base material 122a on the -X side. However, the first external protrusion 124a may be positioned partially along the entire periphery around the X direction of the first lid base material 122a, rather than along the entire periphery around the X direction of the first lid base material 122a.

The first internal protrusion 126a is positioned on the side where the plurality of battery elements 110 are positioned with respect to the first lid base material 122a. The first internal protrusion 126a protrudes toward the +X side from the entire periphery around the X direction of the surface of the first lid base material 122a on the +X side. However, the first internal protrusion 126a may be positioned partially along the entire periphery around the X direction of the first lid base material 122a, rather than along the entire periphery around the X direction of the first lid base material 122a.

The second lid 120b can be configured in the same manner as the first lid 120a, except that the first lid 120a and the second lid 120b are arranged substantially symmetrically.

As shown in FIG. 2 and FIG. 3, the pair of conductors 130 are positioned on both sides of the plurality of battery elements 110 in the X direction. Each conductor 130 and the plurality of battery elements 110 are electrically connected to each other. Hereinafter, unless otherwise specified, a first conductor 130a and a second conductor 130b refer to the conductor 130 on the - X side and the conductor 130 on the +X side, respectively. The first conductor 130a has a first barrier layer 132a, a first external terminal 134a, and a first internal terminal 136a. The second conductor 130b has a second barrier layer 132b, a second external terminal 134b, and a second internal terminal 136b. The second barrier layer 132b, the second external terminal 134b, and the second internal terminal 136b correspond to the first barrier layer 132a, the first external terminal 134a, and the first internal terminal 136a, respectively.

The first conductor 130a is described with reference to FIG. 2 and FIG. 3.

The first barrier layer 132a is a layer perpendicular to the X direction. The first barrier layer 132a is, for example, a conductor such as a metal layer. The first lid base material 122a and the first barrier layer 132a at least partially overlap each other in the X direction. The first barrier layer 132a is at least partially positioned between the first lid base material 122a and the plurality of battery elements 110. The water vapor transmission rate of the first barrier layer 132a is less than the water vapor transmission rate of the first lid base material 122a. Accordingly, the first barrier layer 132a can block permeation of moisture from the first lid 120a toward the plurality of battery elements 110. The first internal protrusion 126a is at least partially positioned around the X direction of the first barrier layer 132a. Thus, the first barrier layer 132a can be positioned or retained by the first internal protrusion 126a.

The first external terminal 134a is, for example, a conductor such as a metal block. The first external terminal 134a is positioned on the opposite side from the side where the plurality of battery elements 110 are positioned with respect to the first barrier layer 132a. The first external terminal 134a is a protrusion protruding toward the -X side from the substantially central portion of the surface of the first barrier layer 132a on the -X side. However, the first external terminal 134a may protrude toward the -X side from a portion shifted from the substantially central portion of the surface of the first barrier layer 132a on the -X side. The first external terminal 134a passes through the first lid base material 122a in the X direction and is extended out toward the -X side from the surface of the first lid base material 122a on the -X side. Thus, the first external terminal 134a may be electrically connected to a conductor such as a bus bar or the like (not shown) provided outside the battery cell 100. In the embodiment, the first conductor 130a and a conductor such as a bus bar or the like can be electrically connected to each other more easily compared to a case where the first conductor 130a does not have the first external terminal 134a. Accordingly, in the embodiment, the function of the first conductor 130a can be enhanced compared to a case where the first conductor 130a does not have the first external terminal 134a.

In the embodiment, the surface of the first barrier layer 132a on the -X side and the surface of the first external terminal 134a on the +X side are welded to each other by welding such as ultrasonic bonding. Thus, the surface of the first barrier layer 132a on the -X side and the surface of the first external terminal 134a on the +X side are at least partially joined to each other. Accordingly, the first barrier layer 132a and the first external terminal 134a are electrically connected to each other. However, the surface of the first barrier layer 132a on the -X side and the surface of the first external terminal 134a on the +X side are not necessarily joined by welding.

The first internal terminal 136a is, for example, a conductor such as a metal block. The first internal terminal 136a is at least partially positioned between the first barrier layer 132a and the plurality of battery elements 110. The first internal terminal 136a is a protrusion protruding toward the +X side from the substantially central portion of the surface of the first barrier layer 132a on the +X side. However, the first internal terminal 136a may protrude toward the +X side from a portion shifted from the substantially central portion of the surface of the first barrier layer 132a on the +X side. The plurality of positive electrode current collectors 112 and the first internal terminal 136a are at least partially joined to each other by bonding such as laser welding. Thus, the positive electrodes of the battery elements 110 and the first internal terminal 136a are electrically connected to each other via the positive electrode current collectors 112. In the embodiment, the first conductor 130a and each battery element 110 can be brought close to each other in the X direction more easily compared to a case where the first conductor 130a does not have the first internal terminal 136a. Thus, in the embodiment, the first conductor 130a and the plurality of positive electrode current collectors 112 can be joined to each other more easily compared to a case where the first conductor 130a does not have the first internal terminal 136a. Accordingly, in the embodiment, the function of the first conductor 130a can be enhanced compared to a case where the first conductor 130a does not have the first internal terminal 136a.

In the embodiment, the surface of the first barrier layer 132a on the +X side and the surface of the first internal terminal 136a on the -X side are welded to each other by welding such as ultrasonic bonding. Thus, the surface of the first barrier layer 132a on the +X side and the surface of the first internal terminal 136a on the -X side are at least partially joined to each other. Accordingly, the first barrier layer 132a and the first internal terminal 136a are electrically connected to each other. However, the surface of the first barrier layer 132a on the +X side and the surface of the first internal terminal 136a on the -X side are not necessarily joined by welding.

The second conductor 130b can be configured in the same manner as the first conductor 130a, except that the first conductor 130a and the second conductor 130b are arranged substantially symmetrically, the plurality of negative electrode current collectors 114 and the second internal terminal 136b are at least partially joined to each other by bonding such as laser welding, and the first conductor 130a and the second conductor 130b optionally contain materials different from each other.

The first conductor 130a and the second conductor 130b can contain appropriate materials according to the polarity of the electrodes to which the first conductor 130a and the second conductor 130b are electrically connected.

Regarding the first conductor 130a electrically connected to the positive electrodes of the battery elements 110, the first barrier layer 132a, the first external terminal 134a, and the first internal terminal 136a may contain at least one of aluminum and an aluminum alloy, for example. The first barrier layer 132a, the first external terminal 134a, and the first internal terminal 136a may contain the same material, or may contain materials different from each other.

Regarding the second conductor 130b electrically connected to the negative electrodes of the battery elements 110, the second barrier layer 132b, the second external terminal 134b, and the second internal terminal 136b may contain at least one of copper and a copper alloy, for example. The second barrier layer 132b, the second external terminal 134b, and the second internal terminal 136b may contain the same material, or may contain materials different from each other.

The second external terminal 134b may contain a material different from the materials contained in the second barrier layer 132b and the second internal terminal 136b. For example, in a state where the second barrier layer 132b and the second internal terminal 136b contain at least one of copper and a copper alloy, the second external terminal 134b may contain at least one of aluminum and an aluminum alloy. In the case of the second barrier layer 132b and the second internal terminal 136b containing at least one of copper and a copper alloy, the electrical connection between the negative electrode current collectors 114 and the second internal terminal 136b can be improved compared to a case where the second barrier layer 132b and the second internal terminal 136b contain at least one of aluminum and an aluminum alloy. In the case of the second external terminal 134b containing at least one of aluminum and an aluminum alloy, the electrical connection between a conductor such as a bus bar or the like outside the battery cell 100 and the second external terminal 134b can be improved compared to a case where the second external terminal 134b contains at least one of copper and a copper alloy.

The exterior film 140 is wound around the battery elements 110 and the pair of lids 120 around the X direction. The exterior film 140 is, for example, a laminate film.

As shown in FIG. 2 and FIG. 3, the outer peripheral surface of the first lid base material 122a around the X direction and the inner peripheral surface of the portion of the exterior film 140 around the X direction of the first lid base material 122a are at least partially joined to each other by bonding such as heat fusion. As shown in FIG. 2 and FIG. 3, the outer peripheral surface of the first external protrusion 124a around the X direction and the inner peripheral surface of the portion of the exterior film 140 around the X direction of the first external protrusion 124a are at least partially joined to each other by bonding such as heat fusion. As shown in FIG. 2 and FIG. 3, the outer peripheral surface of the first internal protrusion 126a around the X direction and the inner peripheral surface of the portion of the exterior film 140 around the X direction of the first internal protrusion 126a are at least partially joined to each other by bonding such as heat fusion. Thus, the battery cell 100 has a sealing portion on the -X side formed by the first lid 120a and the end portion of the exterior film 140 on the -X side. The battery cell 100 further has a sealing portion on the +X side formed, in the same manner as the sealing portion on the -X side, by the second lid 120b and the end portion of the exterior film 140 on the +X side. The battery cell 100 further has another sealing portion extending in the X direction from one of the sealing portions on both sides in the X direction to the other. For example, in the case where the exterior film 140 is wound one turn around the battery elements 110 and the pair of lids 120 around the X direction, excess length portions drawn out from the portions of the exterior film 140 wound around the battery elements 110 and the pair of lids 120 are joined to each other by bonding such as heat fusion, thereby forming the another sealing portion.

The pair of lids 120 and the exterior film 140 form an accommodation space that accommodates the plurality of battery elements 110. The accommodation space is sealed by the sealing portions on both sides of the battery cell 100 in the X direction and the another sealing portion extending from one of the sealing portions on both sides of the battery cell 100 in the X direction to the other. In the embodiment, the accommodation space accommodates an electrolyte solution together with the plurality of battery elements 110.

In the example shown in FIG. 2 and FIG. 3, the first conductor 130a defines a hole 131. The hole 131 passes through the first barrier layer 132a, the first external terminal 134a, and the first internal terminal 136a in the X direction. For the purpose of description, the hole 131 is not illustrated in FIG. 1. As viewed from the X direction, the hole 131 is positioned at the substantially central portion of the first conductor 130a. However, as viewed from the X direction, the hole 131 may be shifted from the substantially central portion of the first conductor 130a. The hole 131 serves as a liquid injection port for injecting the electrolyte solution into the accommodation space formed by the pair of lids 120 and the exterior film 140.

As shown in FIG. 2 and FIG. 3, a plug 138 is embedded in the hole 131. Thus, the hole 131 is blocked by the plug 138. Accordingly, the hole 131 can be sealed by the plug 138. The plug 138 is, for example, a metal. In the embodiment, the inner peripheral surface of the hole 131 of the first conductor 130a around the X direction and the outer peripheral surface of the plug 138 around the X direction are welded to each other. Thus, the structure of the hole 131 can be simplified compared to a case where the plug 138 is screwed into the hole 131. In the case where the plug 138 is screwed into the hole 131, a resin for filling the space between the hole 131 and the plug 138 may be needed. In contrast, in the embodiment, the hole 131 can be sealed by the plug 138 without filling a resin between the hole 131 and the plug 138. However, the plug 138 may be a screw that can be screwed into the hole 131.

In the example shown in FIG. 2 and FIG. 3, the plug 138 is positioned at least partially inside the first external terminal 134a. Thus, the inner peripheral surface of the hole 131 of the conductor 130 around the X direction and the outer peripheral surface of the plug 138 around the X direction can be welded to each other more easily compared to a case where the plug 138 is positioned inside the first barrier layer 132a or inside the first internal terminal 136a. However, the plug 138 may be positioned at least partially inside the first barrier layer 132a or inside the first internal terminal 136a.

In the example shown in FIG. 2 and FIG. 3, the hole 131 and the plug 138 are provided in the first conductor 130a. However, the hole 131 and the plug 138 may be provided in the second conductor 130b instead of, or in addition to, the first conductor 130a.

The first lid 120a, the first conductor 130a, and the end portion of the exterior film 140 on the -X side according to the embodiment are further described with reference to FIG. 2 and FIG. 3. The matters described below regarding the first lid 120a, the first conductor 130a, and the end portion of the exterior film 140 on the -X side are also applicable to the second lid 120b, the second conductor 130b, and the end portion of the exterior film 140 on the +X side.

In the embodiment, heat applied from a seal bar (not shown) to the inner peripheral surface of the first external protrusion 124a around the X direction and the outer peripheral surface of the portion of the exterior film 140 around the X direction of the first external protrusion 124a causes the outer peripheral surface of the first external protrusion 124a around the X direction and the inner peripheral surface of the portion of the exterior film 140 around the X direction of the first external protrusion 124a to be at least partially heat-fused to each other. Thus, the first lid 120a and the end portion of the exterior film 140 on the -X side can be heat-fused to each other more easily compared to a case where the first lid 120a does not have the first external protrusion 124a. Furthermore, the bonding area between the first lid 120a and the exterior film 140 can be increased compared to a case where the first lid 120a does not have the first external protrusion 124a. Accordingly, compared to a case where the first lid 120a does not have the first external protrusion 124a, the bonding strength of the first lid 120a and the end portion of the exterior film 140 on the -X side can be improved, and the sealing property of the sealing portion of the battery cell 100 on the -X side can be improved.

In the embodiment, as described above, heat is applied from the inner peripheral surface of the first external protrusion 124a around the X direction and the outer peripheral surface of the portion of the exterior film 140 around the X direction of the first external protrusion 124a. Part of this heat also propagates to the first internal protrusion 126a and the exterior film 140 around the X direction of the first internal protrusion 126a. Thus, the heat can also cause the outer peripheral surface of the first internal protrusion 126a around the X direction and the inner peripheral surface of the portion of the exterior film 140 around the X direction of the first internal protrusion 126a to be at least partially heat-fused to each other.

In the embodiment, compared to a case where the first lid 120a does not have the first internal protrusion 126a, the bonding area between the first lid 120a and the exterior film 140 can be increased by an amount corresponding to the first internal protrusion 126a. If the bonding area between the first lid 120a and the exterior film 140 is secured using the first external protrusion 124a in a state where the first lid 120a does not have the first internal protrusion 126a, the dimension of the first external protrusion 124a in the X direction may become relatively large, making it relatively difficult to reduce the size of the battery cell 100 in the X direction. In contrast, in the embodiment, the bonding area between the first lid 120a and the exterior film 140 on the -X side can be secured by both the first external protrusion 124a and the first internal protrusion 126a. Accordingly, in the embodiment, compared to a case where the first lid 120a does not have the first internal protrusion 126a, the dimension of the first external protrusion 124a in the X direction can be reduced, and the battery cell 100 can be reduced in size in the X direction. Thus, in the embodiment, compared to a case where the first lid 120a does not have the first internal protrusion 126a, an improvement in the sealing property of the sealing portion of the battery cell 100 on the -X side and a reduction in size of the battery cell 100 in the X direction can both be achieved.

In the example shown in FIG. 2 and FIG. 3, the dimension of the first internal protrusion 126a in the X direction from the -X side to the +X side is less than the dimension of the first external protrusion 124a in the X direction from the +X side to the -X side. In the example shown in FIG. 2 and FIG. 3, the dimension of the first internal protrusion 126a in the X direction is the distance in the X direction between the surface of the first lid base material 122a on the +X side and the end surface of the first internal protrusion 126a on the +X side. In the example shown in FIG. 2 and FIG. 3, the dimension of the first external protrusion 124a in the X direction is the distance in the X direction between the surface of the first lid base material 122a on the -X side and the end surface of the first external protrusion 124a on the -X side. As described above, in the embodiment, part of the heat applied from the inner peripheral surface of the first external protrusion 124a around the X direction and the outer peripheral surface of the portion of the exterior film 140 around the X direction of the first external protrusion 124a propagates to the first internal protrusion 126a and the portion of the exterior film 140 around the X direction of the first internal protrusion 126a. Accordingly, in the example shown in FIG. 2 and FIG. 3, more heat can be transmitted to the first internal protrusion 126a and the portion of the exterior film 140 around the X direction of the first internal protrusion 126a more easily compared to a case where the dimension of the first internal protrusion 126a in the X direction is greater than or equal to the dimension of the first external protrusion 124a in the X direction. Thus, in the example shown in FIG. 2 and FIG. 3, the bonding strength of the first internal protrusion 126a and the end portion of the exterior film 140 on the -X side can be improved compared to a case where the dimension of the first internal protrusion 126a in the X direction is greater than or equal to the dimension of the first external protrusion 124a in the X direction. However, the dimension of the first internal protrusion 126a in the X direction may be greater than or equal to the dimension of the first external protrusion 124a in the X direction.

In the example shown in FIG. 2 and FIG. 3, the first internal terminal 136a is positioned closer to the side where the plurality of battery elements 110 are positioned than the first internal protrusion 126a. That is, the end surface of the first internal terminal 136a on the +X side is shifted to the +X side with respect to the end surface of the first internal protrusion 126a on the +X side. Thus, the positive electrode current collectors 112 and the first internal protrusion 126a are less likely to interfere with each other compared to a case where the end surface of the first internal terminal 136a on the +X side and the end surface of the first internal protrusion 126a on the +X side are flush with each other. Accordingly, the output of the battery cell 100 can be stabilized compared to a case where the positive electrode current collectors 112 and the first internal protrusion 126a interfere with each other. Thus, compared to a case where the end surface of the first internal terminal 136a on the +X side and the end surface of the first internal protrusion 126a on the +X side are flush with each other, an improvement in the sealing property of the sealing portion of the battery cell 100 on the -X side and stabilization of the output of the battery cell 100 can both be achieved. However, the end surface of the first internal terminal 136a on the +X side and the end surface of the first internal protrusion 126a on the +X side may be flush with each other. Alternatively, the end surface of the first internal terminal 136a on the +X side may be shifted to the -X side with respect to the end surface of the first internal protrusion 126a on the +X side.

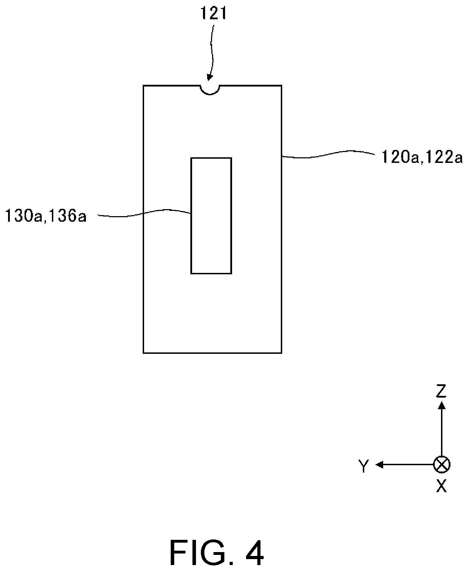

FIG. 4 is a front view of the first lid 120a and the first conductor 130a according to the first example of the embodiment. In FIG. 4, an open circle with an X indicating the X direction shows that the arrow indicating the X direction extends from the front toward the back of the page.

As shown in FIG. 4, the first lid 120a defines a recess 121. The recess 121 may pass through the first lid 120a from one end of the first lid 120a on the -X side to the other end of the first lid 120a on the +X side, or may be partially positioned from one end of the first lid 120a on the -X side to the other end of the first lid 120a on the +X side. The outer peripheral surface of the first lid 120a around the X direction including the recess 121 and the inner peripheral surface of the exterior film 140 around the X direction are joined to each other by bonding such as heat fusion. Inside the accommodation space formed by the pair of lids 120 and the exterior film 140, gas may be generated from the battery elements 110 due to an abnormality in the battery elements 110. This gas may cause the internal pressure of the accommodation space to rise. Due to the rise in the internal pressure of the accommodation space, stress is generated in the first lid 120a and the exterior film 140 that causes the outer peripheral surface of the first lid 120a around the X direction and the inner peripheral surface of the exterior film 140 around the X direction to peel from each other. In the example shown in FIG. 4, due to the shape of the recess 121, this stress tends to concentrate at the recess 121. Thus, in the example shown in FIG. 4, in the case where the internal pressure of the accommodation space rises, the outer peripheral surface of the first lid 120a around the X direction and the inner peripheral surface of the exterior film 140 around the X direction are more easily peeled from each other at the recess 121 than at portions different from the recess 121. Accordingly, the portions of the first lid 120a and the exterior film 140 that are joined to each other at the recess 121 can function as a gas release valve in the case where the internal pressure of the accommodation space rises.

In the example shown in FIG. 4, as viewed from the X direction, the recess 121 is positioned at the substantially central portion in the Y direction of the short side of the first lid 120a on the +Z side. Accordingly, in the case where the internal pressure of the accommodation space rises, stress can be concentrated at the recess 121 more easily compared to a case where the recess 121 is shifted in the Y direction from the substantially central portion in the Y direction of the short side of the first lid 120a on the +Z side. Thus, the portions of the first lid 120a and the exterior film 140 that are joined to each other at the recess 121 can function as a gas release valve more easily compared to a case where the recess 121 is shifted in the Y direction from the substantially central portion in the Y direction of the short side of the first lid 120a on the +Z side. However, as viewed from the X direction, the recess 121 may be shifted in the Y direction from the substantially central portion in the Y direction of the short side of the first lid 120a on the +Z side. As viewed from the X direction, the recess 121 may be positioned on the short side of the first lid 120a on the -Z side instead of, or in addition to, the short side of the first lid 120a on the +Z side. The number of recesses 121 positioned on each side may be one, or may be two or more.

A plurality of battery cells 100 according to the embodiment may be arranged in the Y direction. In the case where a plurality of battery cells 100 are arranged in the Y direction, by setting the recess 121 on the +Z side or -Z side of the first lid 120a, gas discharged from the recess 121 is less likely to propagate to other battery cells 100 compared to a case where the recess 121 is positioned on the +Y side or -Y side of the first lid 120a, making it possible to reduce the influence of the gas discharged from the recess 121 on the other battery cells 100.

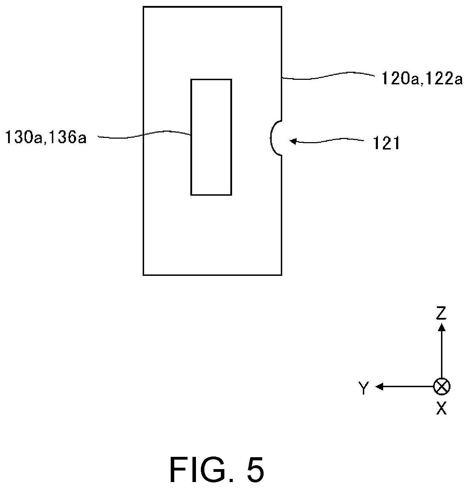

FIG. 5 is a front view of the first lid 120a and the first conductor 130a according to the second example of the embodiment. The second example shown in FIG. 5 is similar to the first example shown in FIG. 4, except for the following points.

As shown in FIG. 5, as viewed from the X direction, the recess 121 may be positioned at the substantially central portion in the Z direction of the long side of the first lid 120a on the -Y side. In the example shown in FIG. 5, the portions of the first lid 120a and the exterior film 140 that are joined to each other at the recess 121 can also function as a gas release valve in the case where the internal pressure of the accommodation space rises. Furthermore, the portions of the first lid 120a and the exterior film 140 that are joined to each other at the recess 121 can function as a gas release valve more easily compared to a case where the recess 121 is shifted in the Z direction from the substantially central portion in the Z direction of the long side of the first lid 120a on the -Y side. However, as viewed from the X direction, the recess 121 may be shifted in the Z direction from the substantially central portion in the Z direction of the long side of the first lid 120a on the -Y side. As viewed from the X direction, the recess 121 may be positioned on the long side of the first lid 120a on the +Y side instead of, or in addition to, the long side of the first lid 120a on the -Y side. The number of recesses 121 positioned on each side may be one, or may be two or more.

The position at which the recess 121 is provided is not limited to the examples shown in FIG. 4 and FIG. 5. As viewed from the X direction, the recess 121 may be positioned on two sides of the first lid 120a that intersect each other, on three sides, or on all four sides. As viewed from the X direction, the recess 121 may be positioned at at least one of the four corners of the first lid 120a.

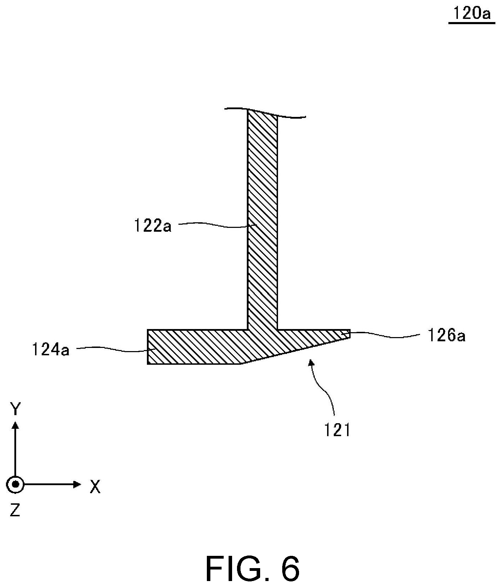

FIG. 6 is a schematic cross-sectional view of a part of the first lid 120a according to the third example of the embodiment. The third example shown in FIG. 6 is similar to the first example shown in FIG. 4, except for the following points.

As shown in FIG. 6, the recess 121 may be partially positioned from one end of the first lid 120a on the -X side to the other end of the first lid 120a on the +X side. In the example shown in FIG. 6, the recess 121 extends from the end surface of the first internal protrusion 126a on the +X side to the end portion of the first external protrusion 124a on the +X side. In the example shown in FIG. 6, the dimension of the recess 121 in the Y direction decreases toward the -X side. In the example shown in FIG. 6, as viewed from the Z direction, the surface of the first lid 120a on the -Y side where the recess 121 is formed is linear. In the example shown in FIG. 6, the portions of the first lid 120a and the exterior film 140 that are joined to each other at the recess 121 can also function as a gas release valve in the case where the internal pressure of the accommodation space rises.

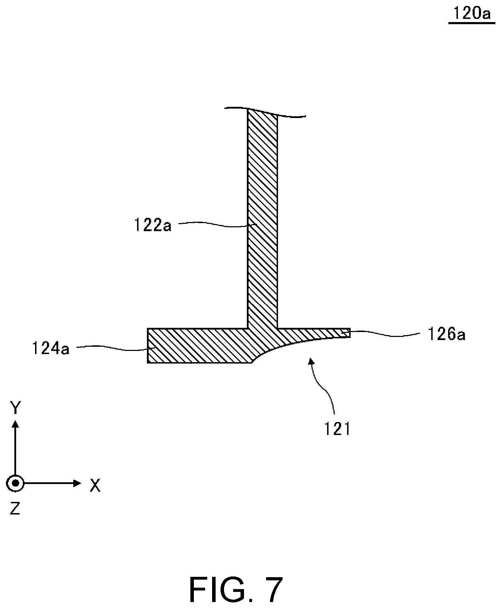

FIG. 7 is a schematic cross-sectional view of a part of the first lid 120a according to the fourth example of the embodiment. The fourth example shown in FIG. 7 is similar to the third example shown in FIG. 6, except for the following points.

As shown in FIG. 7, as viewed from the Z direction, the surface of the first lid 120a on the -Y side where the recess 121 is formed may be curved. In the example shown in FIG. 7, the portions of the first lid 120a and the exterior film 140 that are joined to each other at the recess 121 can also function as a gas release valve in the case where the internal pressure of the accommodation space rises.

Although the embodiments of the present invention have been described above with reference to the drawings, these are illustrative of the present invention, and it is also possible to adopt various configurations other than those described above.

This application claims priority based on Japanese Patent Application No. 2024-012110, filed on January 30, 2024, the entire disclosure of which is incorporated herein by reference. Description of Reference Numerals

100 battery cell, 110 battery element, 112 positive electrode current collector, 114 negative electrode current collector, 120 lid, 120a first lid, 120b second lid, 121 recess, 122a first lid base material, 122b second lid base material, 124a first external protrusion, 124b second external protrusion, 126a first internal protrusion, 126b second internal protrusion, 130 conductor, 130a first conductor, 130b second conductor, 131 hole, 132a first barrier layer, 132b second barrier layer, 134a first external terminal, 134b second external terminal, 136a first internal terminal, 136b second internal terminal, 138 plug, 140 exterior film

## Claims

1. A battery cell, comprising:
a battery element;
a lid at least partially covering the battery element;
a conductor electrically connected to the battery element; and
an exterior film wound around the battery element and the lid, wherein
the conductor comprises a first portion at least partially positioned between the lid and the battery element, a second portion at least partially extended from the lid, and a third portion at least partially positioned between the first portion and the battery element.

2. The battery cell according to claim 1, wherein the first portion and the second portion are at least partially joined to each other, and
the first portion and the third portion are at least partially joined to each other.

3. The battery cell according to claim 1 or 2, wherein the second portion and the third portion comprise materials different from each other.
